# EUROPEAN PATENT SPECIFICATION

(11) **EP 1 600 028 B1**
(45) Date of publication and mention of the grant of the patent: **06.07.2016**
(21) Application number: 04717316.6
(22) Date of filing: 04.03.2004
(51) Int. Cl.: H04Q 9/00

(54) **SYSTEM AND METHOD FOR REMOTE-CONTROLLING CAMERA FUNCTION THROUGH THE RADIO WAVE IN ASYNCHROUS MOBILE COMMUNICATION TERMINAL**
SYSTEM UND VERFAHREN ZUR FERNBEDIENUNG DER KAMERAFUNKTION DURCH DIE FUNKWELLE IN EINEM ASYNCHRONEN MOBILKOMMUNIKATIONSENDGERÄT
SYSTEME ET PROCEDE POUR LA TELECOMMANDE DE FONCTION CAMERA PAR ONDE RADIOELECTRIQUE DANS UN TERMINAL DE COMMUNICATION MOBILE ASYNCHRONE

(30) Priority: 04.03.2003 KR 2003013497
(43) Date of publication of application: 30.11.2005
(73) Proprietor: SK Telecom Co., Ltd., Jongro-ku, Seoul 110-110 (KR)
(72) Inventor: LEE, Donghahk, Seongnam-si, 463-829 Gyeonggi-do (KR); CHUNG, Wonsuk, Seongbuk-gu, 136-062 Seoul, (KR); PARK, Seongsoo, Gangseo-gu, 157-902 Seoul (KR)
(74) Representative: Noble, Nicholas
(86) International application number: PCT/KR2004/000461
(87) International publication number: WO 2004/080108

(56) References cited:
- WO-A-98/25433
- GB-A- 2 374 968
- JP-A- 2000 224 661
- JP-A- 2000 333 266
- KR-A- 2001 059 725
- KR-A- 20010 059 725

## Description

The present disclosure relates to a system and a method for remote-controlling a camera function of a mobile communication terminal by using radio wave, and more particularly to a system and a method for remote-controlling a camera function of an asynchronous mobile communication terminal, which automatically remote-control the camera operation in an asynchronous communication method used for the mobile communication terminal without exerting influence on basic communication functions when a user is positioned at a specific area in which usage of a camera is prohibited while carrying the mobile communication terminal equipped with a small camera.

In general, as techniques associated with cellular phones have been developed and cellular phones have been equipped with various functions, a mobile communication terminal such as a cellular phone may include a small camera or may be coupled with a small camera so as to photograph a subject and store the photographed subject as an image. In addition, a technique for transmitting a photographed image through a communication network has become widely used.

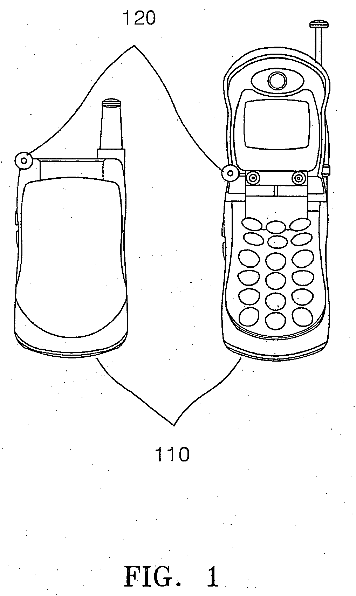

FIG. 1 is a perspective view showing a mobile terminal 100 having a camera function.

As shown in FIG. 1, the mobile terminal 110 has a small camera 120 mounted on a certain part of the mobile terminal 110 suitable for photographing a user or a subject.

Herein, the small camera 120 is not integrally formed with the mobile terminal 110, but detachably coupled to the mobile terminal 110 in such a manner that the small camera 120 can be used by coupling the small camera 120 to the mobile terminal 110.

A user selects a camera function from among a plurality of menus of the mobile terminal 110, fixes a subject to be photographed, and photographs the subject by using the small camera 120 mounted on the mobile terminal 110. The mobile terminal 110 stores images photographed through the small camera 120 as data. Thereafter, a user can transmit photographed and stored image data to other users through a mobile communication network wirelessly.

Due to such a camera function, the mobile communication terminal can transfer a still image or a moving image, or can be used for a video telephony, so that a user can usefully utilize the mobile communication terminal. However, if a user uses the mobile communication terminal in an area where photographing is prohibited, it is hard to distinguish whether the user is using the mobile communication terminal for a communication function or the user is taking a picture. For example, if the mobile terminal 110 having the small camera 120 is operated in a research institute in which a special technique has been actively developed, it is impossible to distinguish whether a user is photographing documents about the special technique or a user is operating the mobile terminal 110 in order to use other services. In this state, secret information can be leaked through the mobile terminal 110.

If the camera is installed on the cellular phone, the user may easily take a picture without being noticed by other people, so a problem occurs in that a user having the mobile communication terminal equipped with a camera may abuse the camera in public places such as a theater, a library, a church, a music hall, an art gallery, a bathhouse, or a research institute. Accordingly, it is necessary to restrict a camera function of a mobile communication terminal in specific places such as areas where photographing is prohibited.

KR 2001 0059725 details an apparatus for controlling an image output of a cellular phone so that privacy or secrets of individuals or companies can be protected from a camera unit of the cellular phone by generating a frequency tone for automatically controlling the camera unit. A security tone generating device controls transmission/reception of an image data. The security tone generating unit includes a security tone generating unit having a tone generating unit, a frequency variation unit and a security region variation unit, and a transmission antenna. The frequency generating unit generates a constant analog frequency tone relating to security. The frequency variation unit varies the frequency tone from the tone generating unit according to a security level. The security region variation unit outputs the variable frequency to a predetermined region according to the frequency tone from the frequency variation unit. An oscillator generating a predetermined frequency may be used as the tone generating unit of the security tone generating unit. The frequency variation unit is a phase locked loop for varying the frequency tone from the oscillator according to the security level, and outputting the varied frequency tone to the security region variation unit. An automatic gain control amp may be used as the security region variation unit.

WO 98/25433 details a method and apparatus for restricting operation of a cellular telephone to well delineated geographical areas. The cellular telephone is equipped with a location device for ascertaining the current geographical location of the cellular telephone. The ascertained geographical location is compared with information pertaining to the allowability of operation of cellular telephones in various geographical locations. A determination is made as to whether the cellular telephone is allowed to operate in its current geographical location. The cellular telephone accordingly enables or disables transmitting by the transceiver of the cellular telephone.

GB2374968 details apparatus for restricting and or prohibiting the use of a portable camera within a predetermined area, comprising a first unit mounted in or on a portable camera. The unit includes a receiver for receiving periodic radio signals from one or more transmitters located remote from the camera within a predetermined area. When the receiver receives a signal, it activates a disable module which disables one or more of the functions of the camera while it is within the predetermined areas. The apparatus may also include a GPS tracking system for tracking the location of the camera and may include an alarm module for emitting an alarm in response to receipt of a signal from the transmitter.

The present disclosure has been made in view of the above-mentioned problems, and aims to provide a system and a method for remote-controlling a camera function of an asynchronous mobile communication terminal, which automatically remote-control the camera operation function in an asynchronous communication method used for the mobile communication terminal without exerting an influence on basic communication functions when a user is positioned at a specific area in which usage of a camera is prohibited while carrying the mobile communication terminal having a small camera.

Aspects and features of the present subject matter are set out in the appended claims.

The foregoing and other features and advantages of the present disclosure will become more apparent from the following detailed description when taken in conjunction with the accompanying drawings in which:
FIG. 1 is a perspective view showing an appearance of a mobile terminal having a camera function;
FIG. 2 is a schematic view showing a structure of a system for remote-controlling a camera function of an asynchronous mobile communication terminal;
FIG. 3 is a schematic view showing an internal structure of a mobile communication terminal;
FIG. 4 is a schematic view showing an internal structure of a radio wave transmitter;
FIG. 5 is a flow chart showing a procedure of transmitting a specific control signal having a predetermined scrambling code from a radio wave transmitter; and
FIG. 6 is a flow chart representing a method of automatically remote-controlling a camera function of an asynchronous mobile communication terminal.

In the following a detailed description of known functions and configurations incorporated herein will be omitted.
A mobile communication terminal includes a PDA terminal, a terminal having a Bluetooth module, a terminal having a wireless LAN as well as general mobile terminals such as a portable terminal. The following will be described in relation to an asynchronous mobile terminal using a code division multiple access (CDMA) mode.

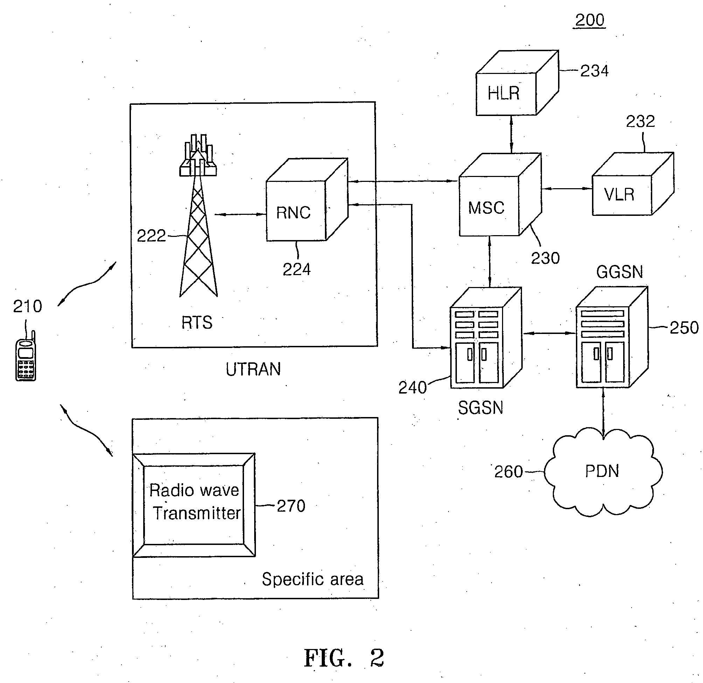

FIG. 2 is a schematic view showing a structure of a system 200 for remote-controlling a camera function of an asynchronous mobile communication terminal.

The system 200 for remote-controlling a camera function includes a mobile terminal 210, a UMTS terrestrial radio access network (UTRAN) 220, a mobile switching center (MSC) 230, a visitor location register (VLR) 232, a home location register (HLR) 234, a serving GPRS support node (SGSN) 240, a gateway GPRS support register (GGSN) 250, a packet data network (PDN) 260, and a radio wave transmitter 270.

The mobile terminal 210 is used for multimedia services and a telephone conversation through a circuit switched network (CSN) and a packet switched network (PSN). Also, the mobile terminal 210 carries out packet data and voice communication through an asynchronous WCDMA network.

Herein, the mobile terminal 210 is a WCDMA connection terminal.

The mobile terminal 210 is equipped with a small camera for photographing a subject, and makes data communication such as a telephone conversation with another mobile terminal through a mobile communication network. In particular, the mobile terminal 210 has a function of stopping camera functions. That is, a specific control signal has predetermined scrambling code, values, when the mobile terminal 210 receives the specific control signal for controlling a camera function from the radio wave transmitter 270.

The UTRAN 220 includes existing radio transceiver subsystem (RTS) 222 and a radio network controller (RNC) 224. The RTS 222 acts as an end-point function of a wireless-connection with the mobile terminal 2.10 based on a wireless access standard of 3GPP (3^{rd} Generation Partnership Project). Also, the RTS 222 transmits or receives voices, images, and data traffic through WCDMA. In addition, the RTS 222 transmits or receives information to or from the mobile terminal 210 through a transceiver antenna. In general, a sub-system accommodated in the RTS 222 includes a base station interconnection subsystem (BIS), a base band subsystem (BBS), and a radio frequency (RF) subsystem.

The RNC 224 performs a wired/wireless channel management, protocol matching of mobile terminals 210, protocol matching of base stations, a soft handoff process, a core network protocol process, a fault management, and a system loading function.

The MSC 230 has a soft switching structure for processing calls at a high speed besides a basic function for a voice communication. Herein, the soft switching is upgraded from a circuit switch of a conventional exchange to a software switch, so that it is possible to process voice, data, and image signals through a high-speed packet switch.

The VLR 232 registers or manages position information of the mobile terminal 210 entering into an area controlled by the MSC 230 and reports a recently obtained position information of the mobile terminal 210 to the HLR 234 of the mobile terminal 210. Also, the VLR 232 receives duplication of profile information of the mobile terminal 210 from the HLR 234 and manages the duplication so as to use the duplication for position control, call processing, external operation processing of the mobile terminal 210. Herein, the profile information of the mobile terminal 210 includes a mobile identification number (MIN), an electrical serial number (ESN), and registered service information of the mobile terminal 210. For the purpose of explanation, FIG. 2 shows that the VLR 232 is installed on the exterior of the MSC 230. However, the VLR 232 is generally included in the MSC 230.

The HLR 234 receives position information of the mobile information 210 from the VLR 232 so as to perform registration recognition, registration deletion, and position tracking. Also, the HLR 234 takes profile information of the mobile terminal 210 from an HLR where the mobile terminal 210 is initially registered by using position information of the mobile terminal 210 delivered from the VLR 232. In addition, the HLR 234 checks a connection state of the mobile terminal 210, which is position-registered in the HLR 234, so as to check whether the mobile terminal 210 is in idle mode or active mode. If the mobile terminal 210 is in the active mode, the HLR 234 continuously checks whether the mobile terminal 210 is connected with a circuit network or a packet network.

The SGSN 240 has a hardware structure performing switch and routing connections based on ATM (asynchronous transfer mode) in order to provide packet data services and provides an operating system (Os) for processing a variety of data services. Herein, the OS carries out GPRS mobility management, GPRS session management, GPRS authentication and accounting, and so forth.

The GGSN 250 is a serving node of a packet network based on IP (internet protocol) providing high-speed packet data services for wireless data services. Also, the GGSN 250 provides mobility of packet data services and processes protocols in relation to various data. Also, the GGSN 250 is connected to a packet data network (PDN) 260. In addition, the GGSN 250 provides address assignment function, domain address change function, and accounting information and maintenance function.

The radio wave transmitter 270 wirelessly transmits a specific control signal to the mobile terminal 210 from the UTRAN 220 through a frequency band identical to that of an asynchronous forward channel for transferring wireless signals to the mobile terminal 210, so that all asynchronous mobile terminals receive specific control signals. Herein, the radio wave transmitter 270 allows first and second synchronous channels of forward channels from the UTRAN 220 to have predetermined scrambling code information in order to control a mobile terminal employing an asynchronous mode, thereby transferring channels including the predetermined scrambling code information to the mobile terminal through a wireless interface.

The radio wave transmitter 270 may wirelessly transfer a specific control signal to a mobile communication terminal through another frequency band without using a frequency band of a mobile communication network. Herein, the mobile communication terminal must employ a frequency band identical to the frequency band used by the radio wave transmitter 270.

The radio wave transmitter 270 is installed at entrances of areas where photographing is prohibited such as theaters, libraries, churches, music halls, art galleries, public baths, research institutes, and so on. Therefore, when a user having a mobile communication terminal equipped with a camera enters into the above-described places, the radio wave transmitter 270 automatically transmits a specific control signal to the mobile communication terminal so as to stop operations of the camera of the mobile communication terminal.

In FIG. 2, the mobile terminal 210 and the radio wave transmitter 270 make communication with each other on the basis of an asynchronous communication system.

A synchronous system can search cells within a short period of time by discriminating codes between cells using offsets of PN (pseudo random number) codes. However, the synchronous system has a disadvantage of requiring an external timing source called "GPS (Global Positioning System)".

In contrast, in the asynchronous system, various base stations, such as indoor small cells and so on, can be installed without using the GPS. Also, such an asynchronous system can be flexibly adjusted even if the asynchronous system moves from an outdoor macro cell to an indoor pico cell.

In FIG. 2, an asynchronous mobile communication system performing code division employs scrambling codes in order to distinguish among base stations. A UMTS standard of WCDMA, which is a European standard, divides scrambling codes into several scrambling code groups having a predetermined length so as to create multiple scrambling codes. Herein, a UMTS mobile communication system not only distinguishes base stations from each other by using the scrambling codes, but also distinguishes users through a channel separation using orthogonal codes for several scrambling code groups as a method of increasing data capacities.

That is, in a next generation mobile communication system, base stations or cells are distinguished by multiplying user bits by single scrambling codes. Also, users are distinguished by multiplying the user bits by channelization codes. Therefore, the next generation mobile communication system assigns scrambling codes different from scrambling codes used by adjacent base stations to a specific base station, so that base stations may be distinguished.

The next generation mobile communication system additionally employs multiple scrambling codes in order to cope with shortage of channelization codes due to increasing number of users. Thus, a base station modulates user signals by using several scrambling codes so as to transfer the user signals.

From among the multiple scrambling codes, a code used for a channel for transferring base station information such as a common pilot channel and a common control channel of the base station is referred to as "primary scrambling code". Also, remaining codes except for the primary scrambling code are referred to as "secondary scrambling codes". Herein, if a base station employs M auxiliary scrambling codes, N*(M+1) scrambling codes are required.

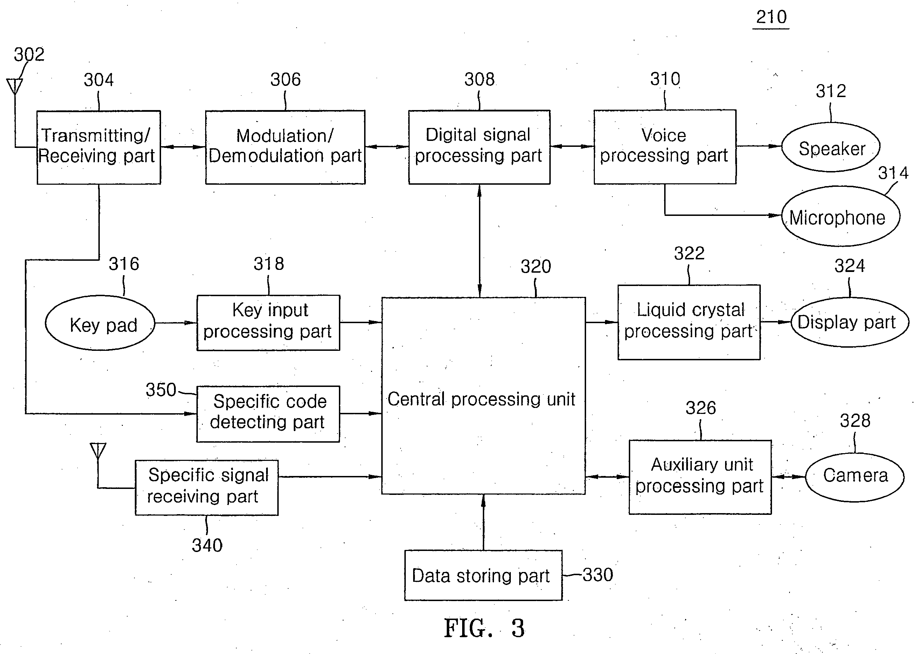

FIG. 3 is a schematic view showing an internal structure of the mobile communication terminal equipped with the mobile terminal 210.

The mobile terminal 210 according to one embodiment of the present invention as the mobile communication terminal includes an antenna 302, a receiving/transmitting part 304, a modulation/demodulation part 306, a digital signal processing part 308, a voice processing part 310, a speaker 312, a microphone 314, a key pad 316, a key input processing part 318, a central processing unit 320, a liquid crystal processing part 322, a display part 324, an auxiliary unit processing part 326, a camera 328, a data storage part 330, a specific signal receiving part 340, and a specific code detecting part 350.

The receiving/transmitting part 304 receives or transmits radio signals through the antenna 302, and the modulation/demodulation part 306 demodulates and amplifies received RF signals or modulates and amplifies signals to be transmitted as RF signals. Also, the modulation/demodulation 306 converts received analog signals into digital signals or transmitted digital signals into analog signals. The digital signal processing part 308 performs a function of coding or decoding voice signals, performs an equalizing function in order to remove multiple path noises, and performs a function of handling sound effect data.

The voice processing part 310 converts digital voice data into voice signals or converts voice signals into digital data. The speaker 312 outputs voice signals as audible sounds, and the microphone 314 inputs users' voices as voice signals.

The key pad part 316 includes a plurality of key buttons used for inputting selected menus or numerics for a telephone conversation, and the key input processing part 318 inputs data corresponding to keys inputted from the key pad part 316.

The central processing unit 320 processes operations of a telephone conversation over a mobile communication network and stops operations of the camera 328 by controlling the auxiliary unit processing part 326 if a specific control signal is received through a pilot channel. Herein, the specific control signal includes a scrambling code for controlling camera functions. If the scrambling code for controlling the camera functions is included in the received pilot channel, the central processing unit 320 deactivates the auxiliary unit processing part 326.

The central processing unit 320 includes a mode-state memory (not shown) therein in order to control activation or deactivation of the auxiliary unit processing part 326. Herein, the mode-state memory usually has a state "1" for representing an activation mode of the auxiliary unit processing part 326. If the auxiliary unit processing part 326 is deactivated, the memory-state changes a state "1" into a state "0" for representing a deactivation mode of the auxiliary unit processing part 326.

The liquid crystal processing part 322 converts digital data, which are used for displaying an operational status of a unit on a liquid crystal screen, into liquid crystal display data.

The auxiliary unit processing part 326 processes functions of units additionally connected to or added to the mobile terminal 210. That is, the auxiliary unit processing part 326 performs data input/ output functions for auxiliary units having a digital camera function, a camcorder function, an audio function, or so forth.

The camera 328 includes a small lens and may be installed on or connected to the mobile terminal 210. Also, the camera 328 inputs images obtained by photographing subjects as data.

The data storage part 330 temporarily stores data received wirelessly, image data inputted from the camera 328, and control data of the central processing unit 320.

The specific signal receiving part 340 is used when the mobile terminal 210 receives a specific control signal from the radio wave transmitter 270 through another frequency band without using a frequency band of a mobile communication network. Herein, a frequency band of the radio wave transmitter 270 transmitting the specific control signal is identical to a frequency band used by the specific signal receiving part 340 of the mobile terminal 210.

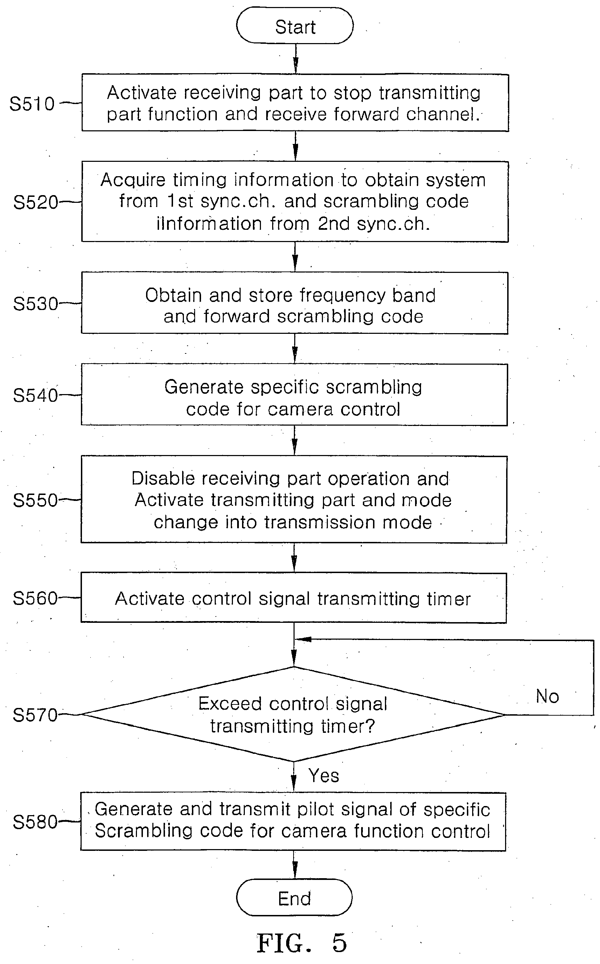

The specific code detecting part 350 detects a scrambling code for controlling camera functions from among signals received by the mobile terminal 210. The description of detecting a scrambling code for controlling camera functions will be described with reference to FIG. 5 in detail.

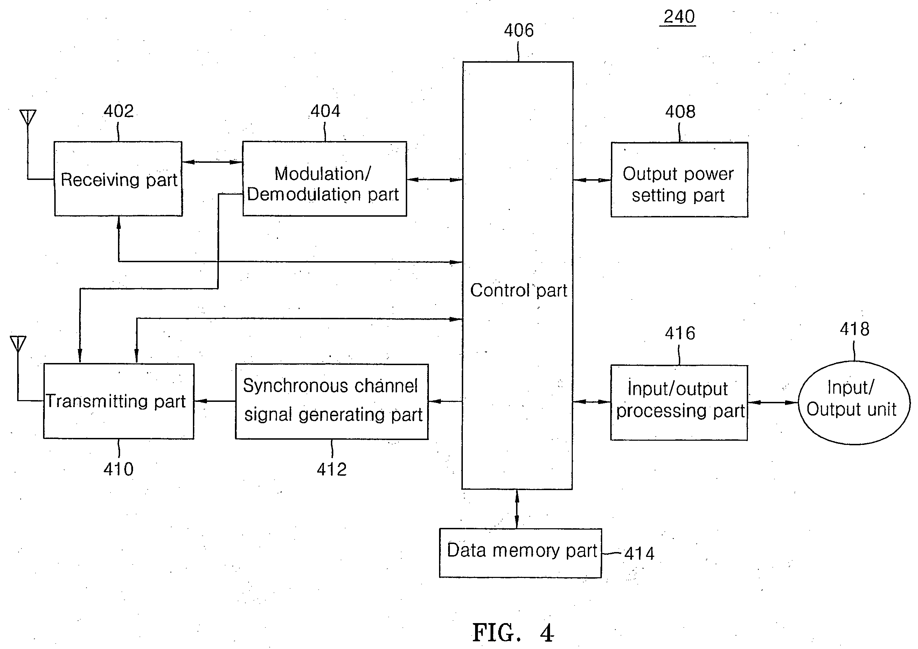

FIG. 4 is a schematic view showing an internal structure of the radio wave transmitter 270 in view of functions of the radio wave transmitter 270.

The radio wave transmitter 270 shown in FIG. 4 includes a receiving part 402, a modulation/demodulation part 404, a control part 406, an output power setting part 408, a transmitting part 410, a synchronous channel signal generating part 412, a data memory 414, an input/output processing part 416, and an input/output unit 418.

The receiving part 402 receives signals of a frequency band used for a mobile communication network. If the mobile terminal 210 uses a specific frequency band by means of the specific signal receiving part 340, the receiving part 402 receives signals of the specific frequency band. Preferably, it is possible for the receiving part 402 to receive not only frequency band signals of all mobile communication systems transmitted from the UTRAN 220 but also frequency band signals assigned to all mobile communication service vendors.

Also, the receiving part 402 converts signals received from the UTRAN 220 through an antenna into baseband signals.

The modulation/demodulation part 404 converts the baseband signals delivered from the receiving part 402 into digital data so as to deliver the converted digital data to the control part 406. Also, the modulation/demodulation part 404 converts data for transmitting wirelessly into transmission signals.

When the control part 406 receives predetermined signals from the modulation/demodulation part 404 as data of a baseband, the control part 406 performs internal calculation operations so as to calculate a predetermined scrambling code. Also, the control part 406 generates synchronous channel signals having the predetermined scrambling code based on the predetermined scrambling code so as to transmit the synchronous channel signals to the mobile terminal 210.

The control part 406 has a memory therein. The memory accommodated in the control part 406 stores information such as a value of a predetermined scrambling code for controlling camera functions, values of scrambling codes used in corresponding frequency bands, used frequency bands of a present base station where the mobile terminal 210 is currently positioned and adjacent base stations around the present base station, and levels of receiving signals. The information is obtained by using control signals transferred from the URTRAN 220 of a cell or a sector where the radio wave transmitter 270 is currently positioned.

It is preferred that the predetermined scrambling code for controlling the camera functions is specially used for controlling camera functions without being used in the base station and the adjacent base stations, but it is not limited to this function.

The predetermined scrambling code is not a duplication of a scrambling code received to the control part 406 from the adjacent base station and is different from a scrambling code value detected from received signals and control information of the URTRAN 220 controlling an area where the radio wave transmitter 270 is currently positioned. The predetermined scrambling code can be calculated in order to avoid overlapping with scrambling code values of all synchronous channels received at a current position of the mobile terminal 210.

An output power setting part 408 is used when manually adjusting power intensity of a pilot signal for controlling camera functions radiated through the antenna in the outside of the radio wave transmitter 270. Accordingly, a user can simply adjust the range of radiation of the synchronous channel signals.

The transmitting part 410 converts pilot signals of a base band delivered from the synchronous channel signal generating part 412 into communication frequency band signals in such a manner that the pilot signals of the base band can be propagated through the antenna.

The synchronous channel signal generating part 412 creates synchronous channel signals having predetermined scrambling codes for controlling camera functions under the periodical signal generation control of the control part 406, so as to deliver the synchronous channel signals to the transmitting part 410.

The synchronous channel signals having predetermined scrambling codes for controlling camera functions delivered to the transmitting part 410 are radiated in the air through the antenna after the synchronous channel signals are formed as RF signals according to a frequency band of a mobile communication system in the transmitting part 410.

The data memory 414 temporarily stores data. Also, the data memory 414 has a predetermined storage sector including protocols for a WCDMA mobile telephone. Accordingly,' the control part 406 controls the receiving part 402, the modulation/demodulation part 404, and the transmitting part 410 according to WCDMA protocols stored in the data memory 414 so as to obtain a scrambling code through a synchronous channel. Thereafter, the control part 406 obtains system information through a forward control channel by using a corresponding scrambling code.

The input/output unit 418 includes a data input unit such as the key pad and a unit for displaying operation states. The input/output processing part 416 receives data corresponding to key inputs from the input/output unit 418 or converts output data into output signals.

The radio wave transmitter 270 according to the present invention is positioned at a cell area controlled by the URTRAN 220 and receives forward channel signals from the URTRAN 220.

In WCDMA method, channels are divided into forward channels and reverse channels according to an inherent function of each channel. The forward channels include a common pilot channel, a synchronous channel, a forward control channel, and a traffic channel. The reverse channels include an access channel and a traffic channel.

The channels are controlled by a unit called "channel element (CE)". The channel element performs modulation/demodulation of signals and multiplexing/demultiplexing of signals according to a predetermined code.

The URTRAN 220 allows slots of a signal frame to be transmitted through the pilot channel to have common codes (CCs), binary codes corresponding to hopping codes, scrambling codes for controlling camera functions. Thereafter, the URTRAN 220 wirelessly transmits the signal through a forward channel.

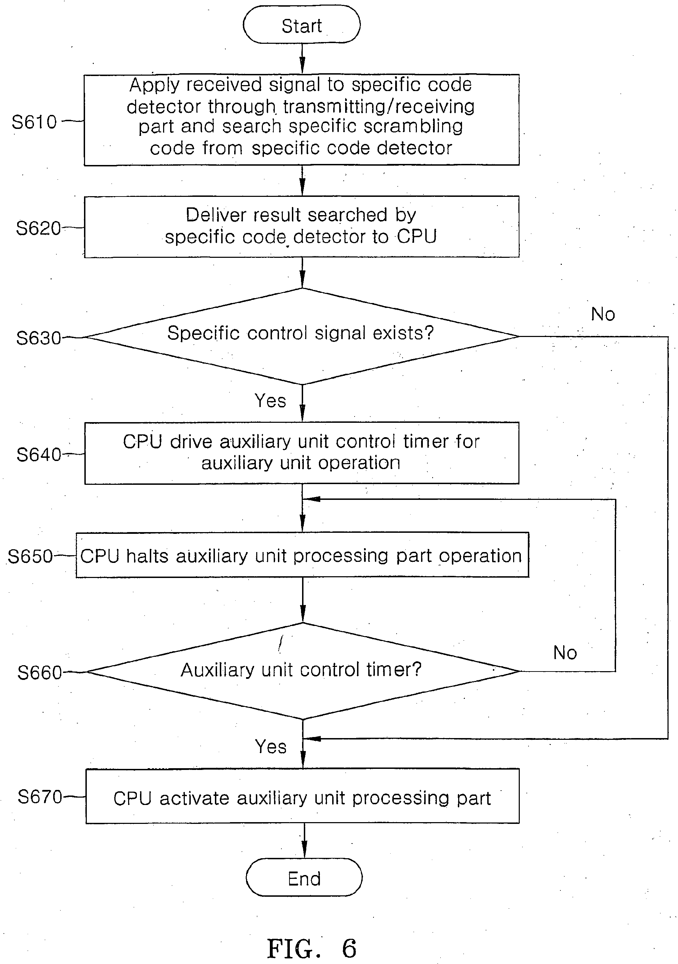

Subsequently, an operation of a system for remote-controlling a camera function of an asynchronous mobile communication terminal with reference to FIGs. 5 and 6 will be described in detail.

FIG. 5 is a flow chart showing a procedure of transmitting a specific control signal for a camera function control from the radio wave transmitter 270 in a method of remote-controlling the camera function of the asynchronous mobile communication terminal according to the present invention.

First, when the radio wave transmitter 270 is powered on, the control part 406 disables an operation of an output amplifier (not shown) included in the transmitting part 410. If the output amplifier has been disabled, the control part 406 enables the receiving part 402 in order to receive signals of the forward channel transferred from a base station, thereby setting the receiving part 402 as a receive mode (S510).

In the receive mode, the control part 406 acquires timing information for obtaining a system from a first synchronous channel and information in relation to a scrambling code from a second synchronous channel, which are administered by a specific mobile communication service vendor, according to WCDMA protocols. Thus, the control part 406 can receive a forward control message through a forward link scrambling code of a base station (S520).

The control part 406 obtains frequency bands used for the present base station and the adjacent base stations and a forward scrambling code used for a corresponding frequency band from the forward control channel so as to store the frequency bands and the forward scrambling code in the internal memory of the control part 406 (S530).

Herein, the control part 406 updates previously-stored scrambling code values and channel numbers if scrambling code values are changed or new frequency bands are added so as to automatically modify the previously-stored scrambling code values and the channel numbers

Subsequently, the control part 406 creates a predetermined scrambling code, which is used for controlling camera functions and not used in a base station managing an area where the radio wave transmitter 270 is positioned and adjacent base stations around the base station, through a specific code creating part 610 on the basis of frequency bands used for the present base station and the adjacent base stations, scrambling code values of forward channels used for a corresponding frequency band, a common code, a base station peculiar code, and so on stored in the internal memory (S540).

If the predetermined scrambling code for controlling camera functions has been created, the control part 406 stops operations of the receiving part 402, activates operations of the transmitting part 410, and is switched into a transmission mode (S550).

Then, the control part 406 activates a control signal transmission timer (not shown) (S560). Herein, the control signal transmission timer counts time in order to transmit synchronous channel signals having the predetermined scrambling code by a predetermined time interval. For example, the control signal transmission timer can be established in such a manner that the synchronous channel signals having the predetermined scrambling code are transmitted by a time interval of 10ms.

If a predetermined time, i.e., 10ms (S570), counted by the control signal transmission timer lapses, the control part 406 generates a synchronous channel signal having the predetermined scrambling code for controlling the camera functions through the synchronous channel signal generating part 412 so as to wirelessly transmit the synchronous channel signal through the transmitting part 410 (S580).

FIG. 6 is a flow chart representing a method of automatically remote-controlling the camera functions of the asynchronous mobile communication terminal according to the present invention.

Radio signals transmitted from the radio wave transmitter 270 are received to the antenna 302 of the mobile terminal 210. The received signals are inputted to the transmitting/receiving part 304 through the antenna 302, demodulated by the modulation/demodulation part 306, and converted into digital data by the digital signal processing part 308. In addition, the received signals inputted to the transmitting/receiving part 304 are applied to the specific code detecting part 350 together with the modulation/demodulation part 306. Herein, the received signals include the predetermined scrambling code for controlling the camera functions. The specific code detecting part 350 detects the predetermined scrambling code from the received signals applied to the transmitting/receiving part 304 (S610).

The central processing unit 320 sets an internal mode state memory as "1" and activates the auxiliary unit processing part 328 in such a manner that a user can ordinarily use the camera 328.

The specific code detecting part 350 delivers a scrambling code calculated through the procedure described with reference to FIG. 5 to the central processing part 320 (S620).

The central processing unit 320 confirms the predetermined scrambling code through information of the synchronous channel signals delivered from the specific code detecting part 350.

The central processing part 320 operates an auxiliary unit control timer for an operation of an auxiliary unit (S640) if the specific control signal delivered from the specific code detecting part 350 exists. The auxiliary unit control timer is used for maintaining an operational state of the auxiliary unit processing part 326 while the auxiliary control timer is counting time when the central processing unit 320 activates or deactivates the auxiliary unit processing part 326.

Also, the central processing unit 320 operates the auxiliary unit control timer and stops an operation of the auxiliary unit processing part 326 so as to deactivate the auxiliary unit processing part 326 (S650). That is, the central processing unit 320 changes "1" of the internal mode-state memory into "0".

The counting time established in the auxiliary unit control timer may be one hour, above one hour, or below one hour. Also, the auxiliary unit control timer re-operates whenever the specific control signal is received from the radio wave transmitter 270.

The central processing unit 320 determines whether or not time counted by the auxiliary unit control timer exceeds the establishment and counting time. If one hour established by the auxiliary unit control timer lapses (S660), the central processing unit 320 changes "0" of the internal mode-state memory into "1" and activates an operation of the auxiliary unit processing part 326 (S670).

Meanwhile, in order to activate the auxiliary unit processing part 326 through a key input of a user, the key pad 316 includes specific key buttons for activating camera operations, or the key input can be specified as a predetermined value (e. g., "#77").

It is possible to automatically remote-control camera functions in an asynchronous mode used for the mobile communication terminal without exerting an influence on basic communication functions when a user reaches a specific area in which photographing is prohibited while carrying an asynchronous mobile communication terminal equipped with a small camera. In this state, although the user resets the mobile terminal 210 by turning on the mobile terminal 210 after turning off the mobile terminal 210, a camera function continuously maintains a stopped-state because a specific control signal is constantly transmitted from the radio wave transmitter 270.

When making communication by using an additional frequency band, it is necessary to install an additional receiving unit for a control frequency band. A service coverage of the radio wave transmitter 270 can be adjusted by controlling output power. A mobile communication terminal, which has received a control signal, enables a camera, operation control timer. The mobile communication terminal receiving the control signal by a predetermined period resumes operation of the camera operation control timer, thereby maintaining an enable state of a camera operation prohibiting function for a predetermined time. If the user leaves the specific area in which photographing is prohibited, the mobile communication terminal disables the camera operation prohibiting function, thereby enabling camera operations.

Also, the mobile communication terminal can employ a variety of wireless communication techniques such as a mobile communication, a wireless LAN, Bluetooth, and so on or the combination of more than two techniques. In these cases, since additional unit controlling information can be differently sent according to wireless interfaces due to several causes, it is necessary to inter-work the wireless interfaces. That is, an enable state or a disable state of the camera operation prohibiting function can be differently represented according to interfaces of an additional unit. Accordingly, the additional unit controlling information according to the interfaces of the additional unit can be used through an OR operation.

While the above has been described in connection with what is presently considered to be the most practical implementation, it is to be understood that the invention is. not limited to the disclosed embodiments and the drawings, but, on the contrary, it is intended to cover various modifications and variations within the scope of the appended claims.

As described above, it is possible to prevent illegal usage of a camera function mounted on a mobile communication terminal from collecting secret information.

Also, when controlling the camera function of the mobile communication terminal in an area where photographing is prohibited, the camera function can be constantly controlled in spite of a reset operation of the mobile communication terminal.

## Claims

1. A system (200) for remote-controlling a camera function of a mobile communication terminal (201), the system (200) comprising:
a mobile communication terminal (201), in use using a communication frequency band for communication, the terminal having an associated camera (328), wherein the terminal has means for disabling camera function upon receipt of a control signal through an asynchronous wireless communication; and
a radio wave transmitter (270) having means for generating the control signal in an asynchronous communication method used by the mobile communication terminal (201) and, using a frequency band corresponding to the communication band, being operable to wirelessly transmit the control signal to the mobile communication terminal (201),
wherein the radio wave transmitter (270) generates a predetermined scrambling code which is different from scramble codes used in a present base station and an adjacent base station, and transmits the predetermined scrambling code as the control signal for controlling the camera function.

2. A system (200) as claimed in claim 1, wherein the mobile communication terminal (201) is operable to make communication with the radio wave transmitter (270) by using a frequency band of a mobile communication network and wherein the predetermined scrambling code is recognized as a signal for controlling a camera (328) from the radio wave transmitter (270) through a predetermined or an additional procedure.

3. A system (200) as claimed in claim 1 or 2, wherein the mobile communication terminal (201) is a mobile terminal (201) for using a mobile communication network employing WCDMA,
and the radio wave transmitter (270) is operable to:-
receive a forward channel scrambling code from a synchronous channel receive signal transferred from a base station of the mobile communication network, and transfer a synchronous channel signal including the predetermined scrambling code for controlling the camera function to the mobile terminal (201), after the predetermined scrambling code is generated, using information relevant to the adjacent base station obtained from a control message on the basis of the forward channel scrambling.

4. A system (200) as claimed in claim 2, wherein the radio wave transmitter (270) is operable to:
transfer a control signal using the predetermined scrambling code defined for controlling a camera (328) of the mobile communication terminal (201) or the control signal using the predetermined scrambling code not overlapped on the basis of adjacent base station information collected by the radio wave transmitter (270),
and the mobile terminal (201) is operable to:
receive a signal having a defined predetermined scrambling code or
recognize a valid forward scrambling code as a control signal if control channel information is not transmitted to the mobile terminal (201) from the base station.

5. A system (200) as claimed in any preceding claim, wherein the radio wave transmitter (270) includes:
a receiving part (402) for receiving signals of the communication band through an antenna and for converting received signals into base-band signals;
a modulation/demodulation part (404) for converting the base-band signals delivered from the receiving part into digital data or for converting data for wireless transmission into transmission signals;
a control part (406) for performing calculation operations so as to calculate the predetermined scrambling code and for generating the synchronous channel signal including the predetermined scrambling code so as to transmit the synchronous channel signal to the mobile communication terminal (201), in a case of receiving predetermined signals as base-band data;
an output power setting part (408) for manually adjusting power intensity of the synchronous channel signal for controlling the camera (328) in an exterior;
a synchronous channel signal generating part (412) for generating the synchronous channel signal having the predetermined scrambling code by receiving periodical control signals from the control part;
a transmitting part (410) for converting the synchronous channel signal generated by the synchronous channel signal generating part into a communication frequency band signal in such a manner that the synchronous channel signal can be propagated through the antenna;
a data memory (414) for temporarily storing data and including a predetermined storage sector having a WCDMA protocol; and
an input/output unit (418) including a part for inputting data and a part for displaying an operation state and preferably
wherein the control part (406) has an internal memory therein, the internal memory storing the predetermined scrambling code for controlling the camera function, frequency bands used by a present base station where the radio wave transmitter (270) is currently positioned and adjacent base stations around the present base station, a forward scrambling code of a corresponding frequency band, and levels of received signals, and the information being obtained from the synchronization channel signal and a forward control channel signal transferred from the base station of a cell or a sector where the radio wave transmitter (270) is positioned, and/or, preferably,
wherein the predetermined scrambling code is obtained by calculating the scrambling code transmitted into the control part (406) from the base station in such a manner that the predetermined scrambling code is not overlapped with a scrambling code value included in all synchronization channel signals received by the mobile terminal (201).

6. A system (200) as claimed in any preceding claim, wherein the mobile terminal (201) includes:
a receiving/ transmitting part (304) for receiving/ transmitting a radio signal through an antenna;
a modulation/demodulation part (306) for demodulating and amplifying a received radio signal or for modulating and amplifying a signal to be transmitted the radio signal;
a digital signal processing part (308) for converting a received analog signal into a digital signal or conventing a transmitted digital signal into an analog signal, for performing a function of coding or decoding voice signals, and for performing an equalizing function of removing multiple path noises;
a voice processing part (310) for converting digital voice data into voice signals or for converting voice signals into digital data;
a speaker (312) for outputting the voice signals as audible sound;
a microphone (314) for a user's voice;
a key pad part (316) including a plurality of key buttons;
a key input processing part (318) for inputting data corresponding to key inputted from the key pad;
a central processing unit (320) which processes operations in relation to the telephone conversation through the mobile communication network and for disabling operations of the camera function if the specific control signal including the predetermined scrambling code for controlling the camera function is received through a synchronous channel;
a liquid crystal process part (322) for converting digital data into display data for a liquid crystal display in order to display and output a unit operation state on the liquid crystal display;
a display part (324) for visually displaying and outputting a unit operation state thereby allowing a user to recognize the operation state of the mobile terminal (201);
an auxiliary unit processing part (326) for performing data input/output processing functions for processing functions of auxiliary units additionally connected to or employed in the mobile terminal (201);
a camera (328) for inputting images obtained by photographing subjects as data;
a data storage part (330) for temporarily storing wirelessly received data, image data inputted from the camera (328), and control data of the central processing unit,
a specific signal receiving part (340) for receiving the specific control signal when the mobile terminal (201) uses not the frequency band of the mobile communication network but an additional frequency band; and
a specific code detecting part (350) for detecting the predetermined scrambling code for controlling the camera function from among signals received by the mobile terminal (201) and, preferably,
wherein the central processing unit (320) of the mobile terminal (201) includes a mode-state memory for controlling activation or deactivation of the auxiliary unit processing part (326), the mode-state memory being ordinarily set as an activation mode for the auxiliary unit processing part (326), the central processing unit (320) sets the mode-state memory as a deactivation mode if the central processing unit (320) receives the specific control signal.

7. A method for automatically remote-controlling a camera function of an asynchronous mobile communication terminal (201) by way of radio wave, the method comprising the steps of:
a) allowing a radio wave transmitter (270) to generate a predetermined scrambling code for controlling a camera function through a mobile communication network, wherein the predetermined scrambling code is different from scramble codes used in a present base station and an adjacent base station;
b) allowing the radio wave transmitter (270) to create a transmission signal including the predetermined scrambling code for controlling the camera function so as to wirelessly transmit the transmission signal;
c) allowing a mobile communication terminal (201) to receive the transmission signal wirelessly;
d) allowing the mobile communication terminal (201) to detect the predetermined scrambling code for controlling the camera function from the transmission signal;
e) operating an auxiliary unit controlling timer of the mobile communication terminal (201) after the predetermined scrambling code for controlling the camera function is detected; and
f) allowing the mobile communication terminal (201) to disable an operation of a camera (328).

8. The method as claimed in claim 7, wherein, in step (a), after the radio wave transmitter (270) disables an operation of an output amplifier of a transmitting part and is in a receiving mode by enabling a receiving part in such a manner that a forward channel signal transmitted from a base station in the mobile communication network is received, the radio wave transmitter (270) obtains timing information from a first synchronization channel managed by a predetermined mobile communication service vendor according to a code division multiple access protocol, a forward scrambling code of the base station from a subsequent second synchronization channel, and system information by using a forward control message, and the radio wave transmitter (270) extracts frequency bands, which is used for the present base station and adjacent base stations, a scrambling code value used for a corresponding frequency band, and a receiving signal level by means of the forward control message so as to store the frequency bands, the scrambling code value, and the receiving signal level in an internal memory, or
wherein, in step (b), the radio wave transmitter (270) generates the predetermined scrambling code for controlling the camera function which is not used the present base station and the adjacent base stations, on a basis of the frequency bands used for the present base station and the adjacent base stations, the scrambling code value used for the corresponding frequency band, a common code, and a base station peculiar code, which are stored in the internal memory, and, after changing a mode into the transmission mode by stopping an operation of the receiving part and activating a function of the transmitting part, creates a synchronization channel signal having the predetermined scrambling code for controlling the camera function when a predetermined time counted by the control signal transmitting timer lapses after activating the control signal transmitting timer, so as to wirelessly transmit the synchronization channel signal through the transmitting part, and, preferably wherein the control signal transmitting timer counts time for transmitting the synchronization channel signal having the predetermined scrambling code by a predetermined period of time, and basically is set in order to transmit the synchronization channel signal having the predetermined scrambling code by time interval of 10 ms or a predetermined time interval, or
wherein
in steps (c) and (d), a transmission signal is inputted to a transmitting/receiving part through an antenna of the mobile communication terminal (201) as a receive signal, the receive signal is applied to a specific code detecting part and a modulation/demodulation part, the specific code detecting part performs a detection operation with respect to the receive signal so as to detect the predetermined scrambling code because the receive signal includes the predetermined scrambling code for controlling the camera function, and delivers a detected result to a central processing unit (320) of the mobile communication terminal (201).

9. The method as claimed in claim 7 or 8, wherein the central processing unit (320) of the mobile communication terminal (201) performs steps (e) and (f) when the predetermined scrambling code is delivered from the specific code detecting part (3500, and preferably
wherein the central processing unit (320) of the mobile communication terminal (201) establishes a deactivation mode for an auxiliary unit processing part (326) in an internal mode-state memory, and mode-changes the deactivation mode for the auxiliary unit processing part (326) into an activation mode if a time established by the auxiliary unit controlling timer lapses, and preferably wherein
an activation or deactivation of the auxiliary unit processing part (326) for the camera function is selectively carried out through key input of a user.

## Patentansprüche

1. System (200) zum Fernsteuern einer Kamerafunktion eines mobilen Kommunikations-Endgeräts (201), wobei das System aufweist:
ein mobiles Kommunikations-Endgerät (201), das unter Verwendung eines Kommunikationsfrequenzbands zur Kommunikation verwendet wird, wobei das Endgerät eine zugehörige Kamera (328) hat und das Endgerät Mittel zum Deaktivieren der Kamerafunktion nach Empfang eines Steuersignals durch eine asynchrone drahtlose Kommunikation hat; und
einen Funkwellensender (270), der Mittel zum Erzeugen des Steuersignals in einem asynchronen Kommunikationsverfahren hat, das von dem mobilen Kommunikations-Endgerät (201) verwendet wird, und der, unter Verwendung eines Frequenzbands, das dem Kommunikationsband entspricht, dazu betreibbar ist, das Steuersignal drahtlos an das mobile Kommunikations-Endgerät (201) zu senden,
wobei der Funkwellensender (270) einen vorgegebenen Scrambling Code erzeugt, der sich von Scrambling Codes unterscheidet, die in einer vorliegenden Basisstation und einer benachbarten Basisstation verwendet werden, und den vorgegebenen Scrambling Code als Steuersignal zum Steuern der Kamerafunktion sendet.

2. System (200) nach Anspruch 1, wobei das mobile Kommunikations-Endgerät (201) dazu betreibbar ist, mit dem Funkwellensender (270) durch Verwenden eines Frequenzbands eines mobilen Kommunikationsnetzwerks zu kommunizieren, und wobei der vorgegebene Scrambling Code als Signal zum Steuern einer Kamera (328) von dem Funkwellensender (270) durch ein vorgegebenes oder ein zusätzliches Verfahren erkannt wird.

3. System (200) nach Anspruch 1 oder 2, wobei das mobile Kommunikations-Endgerät (201) ein mobiles Endgerät (201) zur Verwendung eines mobilen Kommunikationsnetzwerks ist, das WCDMA verwendet,
und der Funkwellensender (270) betreibbar ist zum:
Empfangen eines Vorwärtskanal-Scrambling Codes von einem synchronen Kanalempfangssignal, das von einer Basisstation des mobilen Kommunikationsnetzwerks übertragen wird, und zum Übertragen eines synchronen Kanalsignals einschließlich des vorgegebenen Scrambling Codes zum Steuern der Kamerafunktion an das mobile Endgerät (201), nachdem der vorgegebene Scrambling Code erzeugt worden ist, unter Verwendung von Informationen, die für die benachbarte Basisstation relevant sind und von einer Steuernachricht auf der Basis des Vorwärtskanal-Scramblings erhalten wurden.

4. System (200) nach Anspruch 2, wobei der Funkwellensender (270) betreibbar ist zum:
Übertragen eines Steuersignals unter Verwendung des vorgegebenen Scrambling Codes, der zum Steuern einer Kamera (328) des mobilen Kommunikations-Endgeräts (201) definiert ist, oder des Steuersignals unter Verwendung des vorgegebenen Scrambling Codes, der auf der Basis von Informationen einer benachbarten Basisstation, die von dem Funkwellensender (270) gesammelt werden, nicht überlappt wird,
und wobei das mobile Endgerät (201) betreibbar ist zum:
Empfangen eines Signals, das einen definierten vorgegebenen Scrambling Code hat, oder
Erkennen eines gültigen Vorwärts-Scrambling Codes als Steuersignal, wenn Steuerkanalinformationen nicht von der Basisstation an das mobile Endgerät (201) gesendet werden.

5. System (200) nach einem der vorhergehenden Anspräche, wobei der Funkwellensender (270) aufweist:
ein Empfangsteil (402) zum Empfangen von Signalen des Kommunikationsbands durch eine Antenne und zum Umwandeln der empfangenen Signale in Basisbandsignale;
ein Modulations-/Demodulationsteil (404) zum Umwandeln der von dem Empfangsteil gelieferten Basisbandsignale in digitale Daten oder zum Umwandeln von Daten zum drahtlosen Senden in Sendesignale;
ein Steuerteil (406) zum Durchführen von Rechenoperationen, um den vorgegebenen Scrambling Code zu berechnen, und zum Erzeugen des synchronen Kanalsignals einschließlich des vorgegebenen Scrambling Codes, um das synchrone Kanalsignal an das mobile Kommunikations-Endgerät (201) zu senden, wenn vorgegebene Signale als Basisbanddaten empfangen werden;
ein Ausgangsleistungs-Einstellteil (408) zum manuellen Einstellen der Leistungsintensität des synchronen Kanalsignals zum externen Steuern der Kamera (328);
ein synchrones Kanalsignal-Erzeugungsteil (412) zum Erzeugen des synchronen Kanalsignals, das den vorgegebenen Scrambling Code hat, durch Empfangen von periodischen Steuersignalen von dem Steuerteil;
ein Sendeteil (410) zum Umwandeln des von dem synchronen Kanalsignal-Erzeugungsteil erzeugten synchronen Kanalsignals in ein Kommunikationsfrequenzband-Signal derart, dass das synchrone Kanalsignal durch die Antenne verbreitet werden kann;
einen Datenspeicher (414) zum vorübergehenden Speichern von Daten, der einen vorgegebenen Speichersektor aufweist, welcher ein WCDMA-Protokoll hat; und
eine Eingangs-/Ausgangseinheit (418), die ein Teil zum Eingeben von Daten und ein Teil zum Anzeigen eines Betriebszustands hat, und bevorzugt
wobei das Steuerteil (406) einen internen Speicher hat, wobei der interne Speicher den vorgegebenen Scrambling Code speichert, um die Kamerafunktion zu steuern, Frequenzbänder, die von einer vorliegenden Basisstation verwendet werden, bei der der Funkwellensender (270) aktuell positioniert ist, und von benachbarten Basisstationen um die vorliegende Basisstation herum, einen Vorwärts-Scrambling Code eines korrespondierenden Frequenzbands, und Pegel empfangener Signale, und die Informationen, die von dem Synchronisationskanalsignal und einem Vorwärts-Steuerkanalsignal erhalten werden, die von der Basisstation einer Zelle oder einem Sektor, in dem sich der Funkwellensender (270) befindet, übertragen werden, und/oder bevorzugt
wobei der vorgegebene Scrambling Code erhalten wird durch Berechnen des Scrambling Codes, der von der Basisstation in das Steuerteil (406) gesendet wird, derart, dass der vorgegebene Scrambling Code nicht mit einem Scrambling Code-Wert überlappt, der in allen Synchronisationskanalsignalen enthalten ist, die von dem mobilen Endgerät (201) empfangen werden.

6. System (200) nach einem der vorhergehenden Ansprüche, wobei das mobile Endgerät (201) aufweist:
ein Empfangs-/Sendeteil (304) zum Empfangen/Senden eines Funksignals durch eine Antenne;
ein Modulations-/Demodulationsteil (306) zum Demodulieren und Verstärken eines empfangenen Funksignals oder zum Modulieren und Verstärken eines zu sendenden Signals als Funksignal;
ein digitales Signalverarbeitungsteil (308) zum Umwandeln eines empfangenen analogen Signals in ein digitales Signal oder zum Umwandeln eines gesendeten digitalen Signals in ein analoges Signal, zum Durchführen einer Funktion des Codierens oder Decodierens von Sprachsignalen, und zum Durchführen einer Entzerrungsfunktion des Beseitigens von Mehrpfadrauschen;
ein Sprachverarbeitungsteil (310) zum Umwandeln digitaler Sprachdaten in Sprachsignale oder zum Umwandeln von Sprachsignalen in digitale Daten;
einen Lautsprecher (312) zum Ausgeben der Sprachsignale als hörbaren Ton;
ein Mikrofon (314) für die Sprache eines Benutzers;
ein Tastenwahlteil (316), das eine Vielzahl von Tastenknöpfen aufweist;
ein Tasteneingabe-Verarbeitungsteil (318) zum Eingeben von Daten entsprechend der in dem Tastenwahlteil eingegebenen Taste;
eine zentrale Rechnereinheit (320), die Operationen bezüglich der Telefonkonversation durch das mobile Kommunikationsnetzwerk verarbeitet, und zum Deaktivieren von Operationen der Kamerafunktion, wenn das spezifische Steuersignal, das den vorgegebenen Scrambling Code zum Steuern der Kamerafunktion enthält, durch einen synchronen Kanal empfangen wird;
ein Flüssigkristall-Verarbeitungsteil (322) zum Umwandeln digitaler Daten in Anzeigedaten für eine Flüssigkristallanzeige, um einen Einheitsbetriebszustand auf der Flüssigkristallanzeige anzuzeigen und auszugeben;
ein Anzeigeteil (342) zum visuellen Anzeigen und Ausgeben eines Einheitsbetriebszustands, wodurch es einem Benutzer ermöglicht wird, den Betriebszustand des mobilen Endgeräts (201) zu erkennen;
ein Hilfseinheit-Verarbeitungsteil (326) zum Durchführen von Dateneingabe-/-ausgabe-Verarbeitungsfunktionen zum Verarbeiten von Funktionen von Hilfseinheiten, die zusätzlich mit dem mobilen Endgerät (201) verbunden sind oder darin verwendet werden;
eine Kamera (328) zum Eingeben von Bildern, die durch das Photographieren von Gegenständen als Daten erhalten werden;
ein Datenspeicherteil (330) zum vorübergehenden Speichern von drahtlos empfangenen Daten, Bilddaten, die von der Kamera (328) eingegeben werden, und Steuerdaten der zentralen Rechnereinheit;
ein spezifisches Signalempfangsteil (340) zum Empfangen des spezifischen Steuersignals, wenn das mobile Endgerät (201) nicht das Frequenzband des mobilen Kommunikationsnetzwerks, sondern ein zusätzliches Frequenzband verwendet; und
ein spezifisches Codeermittlungsteil (350) zum Ermitteln des vorgegebenen Scrambling Codes zum Steuern der Kamerafunktion aus Signalen, die von dem mobilen Endgerät (201) empfangen werden, und bevorzugt
wobei die zentrale Rechnereinheit (320) des mobilen Endgeräts (201) einen Moduszustandsspeicher zum Steuern der Aktivierung oder Deaktivierung des Hilfseinheit-Verarbeitungsteils (326) aufweist, wobei der Moduszustandsspeicher gewöhnlich im Aktivierungsmodus für das Hilfseinheit-Verarbeitungsteil (326) eingestellt ist, und die zentrale Rechnereinheit (320) den Moduszustandsspeicher in den Deaktivierungsmodus setzt, wenn die zentrale Rechnereinheit (320) das spezifische Steuersignal empfängt.

7. Verfahren zum automatischen Fernsteuern einer Kamerafunktion eines asynchronen mobilen Kommunikations-Endgeräts (201) mittels Funkwellen, wobei das Verfahren die folgenden Schritte beinhaltet:
a) Ermöglichen eines Funkwellensenders (270), einen vorgegebenen Scrambling Code zum Steuern einer Kamerafunktion durch ein mobiles Kommunikationsnetzwerk zu erzeugen, wobei sich der vorgegebene Scrambling Code von Scrambling Codes unterscheidet, die in einer vorliegenden Basisstation und einer benachbarten Basisstation verwendet werden;
b) Ermöglichen des Funkwellensenders (270), ein Sendesignal einschließlich des vorgegebenen Scrambling Codes zu erzeugen, um die Kamerafunktion zu steuern, um das Sendesignal drahtlos zu senden;
c) Ermöglichen eines mobilen Kommunikations-Endgeräts (201), das Sendesignal drahtlos zu empfangen;
d) Ermöglichen des mobilen Kommunikations-Endgeräts (201), den vorgegebenen Scrambling Code zum Steuern der Kamerafunktion von dem Sendesignal zu ermitteln;
e) Betreiben eines Hilfseinheit-Steuertimers des mobilen Kommunikations-Endgeräts (201), nachdem der vorgegebene Scrambling Code zum Steuern der Kamerafunktion ermittelt worden ist; und
f) Ermöglichen des mobilen Kommunikations-Endgeräts (201), den Betrieb einer Kamera (328) zu deaktivieren.

8. Verfahren nach Anspruch 7, wobei in Schritt (a), nachdem der Funkwellensender (270) den Betrieb eines Ausgangsverstärkers eines Sendeteils deaktiviert hat und sich in einem Empfangsmodus befindet durch Aktivieren eines Empfangsteils derart, dass ein Vorwärtskanalsignal, das von einer Basisstation in dem mobilen Kommunikationsnetzwerk gesendet wird, empfangen wird, der Funkwellensender (270) Timinginformationen von einem ersten Synchronisationskanal erhält, der gemäß einem Code Division Multiple Access Protokoll vom Vertreiber eines vorgegebenen mobilen Kommunikationsdienstes verwaltet wird, einen Vorwärts Scrambling-Code der Basisstation von einem folgenden zweiten Synchronisationskanal, und Systeminformationen durch Verwenden einer Vorwärts-Steuernachricht, und der Funkwellensender (270) Frequenzbänder extrahiert, die für die vorliegende Basisstation und benachbarte Basisstationen verwendet werden, einen Scrambling Code-Wert, der für ein korrespondierendes Frequenzband verwendet wird, und einen Empfangssignalpegel mittels der Vorwärts-Steuernachricht, um die Frequenzbänder, den Scrambling Code Wert und den Empfangssignalpegel in einem internen Speicher zu speichern, oder
wobei, in Schritt (b), der Funkwellensender (270) den vorgegebenen Scrambling Code zum Steuern der Kamerafunktion erzeugt, der nicht in der vorliegenden Basisstation und der benachbarten Basisstation verwendet wird, auf der Basis der Frequenzbänder, die für die vorliegende Basisstation und die benachbarten Basisstationen verwendet werden, des Scrambling Code-Werts, der für das korrespondierende Frequenzband verwendet wird, eines gemeinsamen Codes und eines für die Basisstation eigenen Codes, die in dem internen Speicher gespeichert werden, und, nach dem Ändern des Modus in den Sendemodus durch Stoppen der Operation des Empfangsteils und Aktivieren einer Funktion des Sendeteils, ein Synchronisationskanalsignal erzeugt, das den vorgegebenen Scrambling Code zum Steuern der Kamerafunktion hat, wenn eine vorgegebene Zeit, die von dem Steuersignal-Sendetimer gezählt wird, nach dem Aktivieren des Steuersignal-Sendetimers abgelaufen ist, um das Synchronisationskanalsignal durch das Sendeteil drahtlos zu senden, und wobei bevorzugt der Steuersignal-Sendetimer die Zeit zum Senden des Synchronisationskanalsignals, das den vorgegebenen Scrambling Code hat, für eine vorgegebene Zeitdauer zählt, und im Wesentlichen dazu eingestellt ist, das Synchronisationskanalsignal, das den vorgegebenen Scrambling Code hat, in einem Zeitintervall von 10 ms oder einem vorgegebenen Zeitintervall zu senden, oder
wobei in den Schritten (c) und (d) ein Sendesignal durch eine Antenne des mobilen Kommunikations-Endgeräts (201) als Empfangssignal in ein Sende-/Empfangsteil eingegeben wird, wobei das Empfangssignal an ein spezifisches Codeermittlungsteil und ein Modulations-/Demodulationsteil angelegt wird, wobei das spezifische Codeermittlungsteil eine Ermittlungsoperation bezüglich des Empfangssignals durchführt, um den vorgegebenen Scrambling Code zu ermitteln, weil das Empfangssignal den vorgegebenen Scrambling Code zum Steuern der Kamerafunktion enthält, und das ermittelte Resultat an eine zentrale Rechnereinheit (320) des mobilen Kommunikations-Endgeräts (201) liefert.

9. Verfahren nach Anspruch 7 oder 8, wobei die zentrale Rechnereinheit (320) des mobilen Kommunikations-Endgeräts (201) die Schritte (e) und (f) durchführt, wenn der vorgegebene Scrambling Code von dem spezifischen Codeermittlungsteil (350) geliefert wird, und bevorzugt
wobei die zentrale Rechnereinheit (320) des mobilen Kommunikations-Endgeräts (201) einen Deaktivierungsmodus für ein Hilfseinheit-Verarbeitungsteil (326) in einem internen Moduszustandsspeicher einstellt und den Modus des Deaktivierungsmodus für das Hilfseinheit-Verarbeitungsteil (326) in einen Aktivierungsmodus ändert, wenn eine von dem Hilfseinheit-Steuertimer eingestellte Zeit abläuft, und bevorzugt
wobei eine Aktivierung oder Deaktivierung des Hilfseinheit-Verarbeitungsteils (326) für die Kamerafunktion selektiv durch Tasteneingabe eines Benutzers durchgeführt wird.

## Revendications

1. Système (200) pour commander à distance une fonction de caméra d'un terminal de communication mobile (201), le système (200) comprenant :
un terminal de communication mobile (201), en utilisation à l'aide d'une bande de fréquences de communication pour une communication, le terminal ayant une caméra associée (328), dans lequel le terminal possède un moyen pour désactiver une fonction de caméra après réception d'un signal de commande à travers une communication sans fil asynchrone ; et
un émetteur d'ondes radio (270) ayant un moyen pour générer le signal de commande dans un procédé de communication asynchrone utilisé par le terminal de communication mobile (201) et, à l'aide d'une bande de fréquences correspondant à la bande de communication, étant fonctionnel pour émettre de manière sans fil le signal de commande au terminal de communication mobile (201),
dans lequel l'émetteur d'ondes radio (270) génère un code d'embrouillage prédéterminé qui est différent de codes d'embrouillage utilisés dans une station de base présente et une station de base adjacente, et émet le code d'embrouillage prédéterminé en tant que signal de commande pour commander la fonction de caméra.

2. Système (200) tel que revendiqué à la revendication 1, dans lequel le terminal de communication mobile (201) est fonctionnel pour réaliser une communication avec l'émetteur d'ondes radio (270) par utilisation d'une bande de fréquences d'un réseau de communication mobile et dans lequel le code d'embrouillage prédéterminé est reconnu en tant que signal pour commander une caméra (328) en provenance de l'émetteur d'ondes radio (270) à travers une procédure prédéterminée ou supplémentaire.

3. Système (200) tel que revendiqué à la revendication 1 ou 2, dans lequel le terminal de communication mobile (201) est un terminal mobile (201) pour utiliser un réseau de communication mobile employant WCDMA,
et l'émetteur d'ondes radio (270) est fonctionnel pour :
recevoir un code d'embrouillage de canal aller à partir d'un signal de réception de canal synchrone transféré en provenance d'une station de base du réseau de communication mobile, et transférer un signal de canal synchrone comprenant le code d'embrouillage prédéterminé pour commander la fonction de caméra vers le terminal mobile (201), après que le code d'embrouillage prédéterminé est généré, à l'aide d'informations associées à la station de base adjacente obtenues à partir d'un message de commande sur la base de l'embrouillage de canal aller.

4. Système (200) tel que revendiqué à la revendication 2, dans lequel l'émetteur d'ondes radio (270) est fonctionnel pour :
transférer un signal de commande à l'aide du code d'embrouillage prédéterminé défini pour commander une caméra (328) du terminal de communication mobile (201) ou le signal de commande à l'aide du code d'embrouillage prédéterminé non chevauché sur la base d'informations de station de base adjacente collectées par l'émetteur d'ondes radio (270),
et le terminal mobile (201) est fonctionnel pour :
recevoir un signal ayant un code d'embrouillage prédéterminé défini ou
reconnaître un code d'embrouillage aller valide en tant que signal de commande si des informations de canal de commande ne sont pas émises au terminal mobile (201) par la station de base.

5. Système (200) tel que revendiqué à une revendication précédente quelconque, dans lequel l'émetteur d'ondes radio (270) comprend :
une partie de réception (402) pour recevoir des signaux de la bande de communication à travers une antenne et pour convertir des signaux reçus en signaux de bande de base ;
une partie de modulation/démodulation (404) pour convertir les signaux de bande de base délivrés par la partie de réception en données numériques ou pour convertir des données pour une émission sans fil en signaux d'émission ;
une partie de commande (406) pour réaliser des opérations de calcul afin de calculer le code d'embrouillage prédéterminé et pour générer le signal de canal synchrone comprenant le code d'embrouillage prédéterminé afin d'émettre le signal de canal synchrone au terminal de communication mobile (201), dans un cas de réception de signaux prédéterminés en tant que données de bande de base ;
une partie de réglage de puissance de sortie (408) pour régler manuellement une intensité de puissance du signal de canal synchrone afin de commander la caméra (328) dans un extérieur ;
une partie de génération de signal de canal synchrone (412) pour générer le signal de canal synchrone ayant le code d'embrouillage prédéterminé par réception de signaux de commande périodiques en provenance de la partie de commande ;
une partie d'émission (410) pour convertir le signal de canal synchrone généré par la partie de génération de signal de canal synchrone en un signal de bande de fréquences de communication dans une telle manière que le signal de canal synchrone peut être propagé à travers l'antenne ;
une mémoire de données (414) pour stocker temporairement des données et comprenant un secteur de stockage prédéterminé ayant un protocole WCDMA ; et
une unité d'entrée/sortie (418) comprenant une partie pour entrer des données et une partie pour afficher un état d'opération et de préférence
dans lequel la partie de commande (406) possède une mémoire interne dans celle-ci, la mémoire interne stockant le code d'embrouillage prédéterminé pour commander la fonction de caméra, des bandes de fréquences utilisées par une station de base présente où l'émetteur d'ondes radio (270) est actuellement positionné et des stations de base adjacentes autour de la station de base présente, un code d'embrouillage aller d'une bande de fréquences correspondante, et des niveaux de signaux reçus, et les informations étant obtenues à partir du signal de canal de synchronisation et d'un signal de canal de commande aller transféré à partir de la station de base d'une cellule ou d'un secteur où l'émetteur d'ondes radio (270) est positionné, et/ou, de préférence
dans lequel le code d'embrouillage prédéterminé est obtenu par calcul du code d'embrouillage émis dans la partie de commande (406) en provenance de la station de base dans une telle manière que le code d'embrouillage prédéterminé n'est pas chevauché avec une valeur de code d'embrouillage incluse dans tous les signaux de canal de synchronisation reçus par le terminal mobile (201).

6. Système (200) tel que revendiqué à une revendication précédente quelconque, dans lequel le terminal mobile (201) comprend :
une partie de réception/émission (304) pour recevoir/émettre un signal radio à travers une antenne ;
une partie de modulation/démodulation (306) pour démoduler et amplifier un signal radio reçu ou pour moduler et amplifier un signal à émettre le signal radio ;
une partie de traitement de signal numérique (308) pour convertir un signal analogique reçu en un signal numérique ou convertir un signal numérique émis en un signal analogique, pour réaliser une fonction de codage ou de décodage de signaux vocaux, et pour réaliser une fonction d'égalisation de retrait de multiples bruits de chemin ;
une partie de traitement vocal (310) pour convertir des données vocales numériques en signaux vocaux ou pour convertir des signaux vocaux en données numériques ;
un haut-parleur (312) pour délivrer les signaux vocaux en tant que son audible ;
un microphone (314) pour une voix d'utilisateur ;
une partie de clavier (316) comprenant une pluralité de boutons de touche ;
une partie de traitement d'entrée de touche (308) pour entrer des données correspondant à une touche entrée à partir du clavier ;
une unité centrale de traitement (320) qui traite des opérations en relation avec la conversation téléphonique à travers le réseau de communication mobile et pour désactiver des opérations de la fonction de caméra si le signal de commande spécifique comprenant le code d'embrouillage prédéterminé pour commander la fonction de caméra est reçu à travers un canal synchrone ;
une partie de traitement de cristaux liquides (322) pour convertir des données numériques en données d'affichage pour un dispositif d'affichage à cristaux liquides afin d'afficher et de délivrer un état d'opération d'unité sur le dispositif d'affichage à cristaux liquides ;
une partie d'affichage (324) pour afficher et délivrer visuellement un état d'opération d'unité permettant ainsi à un utilisateur de reconnaître l'état d'opération du terminal mobile (201) ;
une partie de traitement d'unité auxiliaire (326) pour réaliser des fonctions de traitement d'entrée/sortie de données afin de traiter des fonctions d'unités auxiliaires connectées de manière supplémentaire à ou employées dans le terminal mobile (201) ;
une caméra (328) pour entrer des images obtenues par photographie de sujets en tant que données ;
une partie de stockage de données (330) pour temporairement stocker des données reçues de manière sans fil, des données d'image entrées en provenance de la caméra (328), et des données de commande de l'unité centrale de traitement,
une partie de réception de signal spécifique (340) pour recevoir le signal de commande spécifique lorsque le terminal mobile (201) n'utilise pas la bande de fréquences du réseau de communication mobile mais une bande de fréquences supplémentaire ; et
une partie de détection de code spécifique (350) pour détecter le code d'embrouillage prédéterminé pour commander la fonction de caméra parmi des signaux reçus par le terminal mobile (201) et, de préférence,
dans lequel l'unité centrale de traitement (320) du terminal mobile (201) comprend une mémoire d'état de mode pour commander une activation ou une désactivation de la partie de traitement d'unité auxiliaire (326), la mémoire d'état de mode étant usuellement réglée comme un mode d'activation pour la partie de traitement d'unité auxiliaire (326), l'unité centrale de traitement (320) règle la mémoire d'état de mode comme un mode de désactivation si l'unité centrale de traitement (320) reçoit le signal de commande spécifique.

7. Procédé pour automatiquement commander à distance une fonction de caméra d'un terminal de communication mobile asynchrone (201) au moyen d'une onde radio, le procédé comprenant les étapes consistant à :
a) permettre à un émetteur d'ondes radio (270) de générer un code d'embrouillage prédéterminé pour commander une fonction de caméra à travers un réseau de communication mobile, le code d'embrouillage prédéterminé étant différent de codes d'embrouillage utilisés dans une station de base présente et une station de base adjacente ;
b) permettre à l'émetteur d'ondes radio (270) de créer un signal d'émission comprenant le code d'embrouillage prédéterminé pour commander la fonction de caméra afin d'émettre de manière sans fil le signal d'émission ;
c) permettre à un terminal de communication mobile (201) de recevoir le signal d'émission de manière sans fil ;
d) permettre au terminal de communication mobile (201) de détecter le code d'embrouillage prédéterminé pour commander la fonction de caméra à partir du signal d'émission ;
e) actionner un temporisateur de commande d'unité auxiliaire du terminal de communication mobile (201) après que le code d'embrouillage prédéterminé pour commander la fonction de caméra est détecté ; et
f) permettre au terminal de communication mobile (201) de désactiver une opération d'une caméra (328).

8. Procédé tel que revendiqué à la revendication 7, dans lequel, à l'étape (a), après que l'émetteur d'ondes radio (270) désactive une opération d'un amplificateur de sortie d'une partie d'émission et est dans un mode de réception par activation d'une partie de réception dans une telle manière qu'un signal de canal aller émis par une station de base dans le réseau de communication mobile est reçu, l'émetteur d'ondes radio (270) obtient des informations de temporisation en provenance d'un premier canal de synchronisation géré par un vendeur de service de communication mobile prédéterminé selon un protocole d'accès multiple par répartition en code, un code d'embrouillage aller de la station de base en provenance d'un second canal de synchronisation ultérieur, et des informations de système par utilisation d'un message de commande aller, et l'émetteur d'ondes radio (270) extrait des bandes de fréquences, qui sont utilisées pour la station de base présente et des stations de base adjacentes, une valeur de code d'embrouillage utilisée pour une bande de fréquences correspondante, et un niveau de signal de réception au moyen du message de commande aller afin de stocker les bandes de fréquences, la valeur de code d'embrouillage, et le niveau de signal de réception dans une mémoire interne, ou
dans lequel, à l'étape (b), l'émetteur d'ondes radio (270) génère le code d'embrouillage prédéterminé pour commander la fonction de caméra qui n'est pas utilisée par la station de base présente et les stations de base adjacentes, sur une base des bandes de fréquences utilisées pour la station de base présente et les stations de base adjacentes, la valeur de code d'embrouillage utilisée pour la bande de fréquences correspondante, un code commun, et un code particulier de station de base, qui sont stockés dans la mémoire interne, et, après changement d'un mode en le mode d'émission par arrêt d'une opération de la partie de réception et activation d'une fonction de la partie d'émission, crée un signal de canal de synchronisation ayant le code d'embrouillage prédéterminé pour commander la fonction de caméra lorsqu'un temps prédéterminé compté par le temporisateur d'émission de signal de commande s'écoule après activation du temporisateur d'émission de signal de commande, afin d'émettre de manière sans fil le signal de canal de synchronisation à travers la partie d'émission, et, de préférence
dans lequel le temporisateur d'émission de signal de commande compte le temps pour émettre le signal de canal de synchronisation ayant le code d'embrouillage prédéterminé par une période de temps prédéterminée, et est simplement réglé afin d'émettre le signal de canal de synchronisation ayant le code d'embrouillage prédéterminé par un intervalle de temps de 10 ms ou un intervalle de temps prédéterminé, ou
dans lequel
aux étapes (c) et (d), un signal d'émission est entré sur une partie d'émission/réception à travers une antenne du terminal de communication mobile (201) en tant que signal de réception, le signal de réception est appliqué à une partie de détection de code spécifique et à une partie de modulation/démodulation, la partie de détection de code spécifique réalise une opération de détection par rapport au signal de réception afin de détecter le code d'embrouillage prédéterminé en raison du fait que le signal de réception comprend le code d'embrouillage prédéterminé pour commander la fonction de caméra, et délivre un résultat détecté à une unité centrale de traitement (320) du terminal de communication mobile (201).

9. Procédé tel que revendiqué à la revendication 7 ou 8, dans lequel l'unité centrale de traitement (320) du terminal de communication mobile (201) réalise les étapes (e) et (f) lorsque le code d'embrouillage prédéterminé est délivré par la partie de détection de code spécifique (350), et de préférence
dans lequel l'unité centrale de traitement (320) du terminal de communication mobile (201) établit un mode de désactivation pour une partie de traitement d'unité auxiliaire (326) dans une mémoire d'état de mode interne, et change le mode du mode de désactivation pour la partie de traitement d'unité auxiliaire (326) en un mode d'activation si un temps établi par le temporisateur de commande d'unité auxiliaire s'écoule, et de préférence dans lequel
une activation ou une désactivation de la partie de traitement d'unité auxiliaire (326) pour la fonction de caméra est sélectivement réalisée à travers une entrée de touche d'un utilisateur.
